# FASCICULE DE BREVET EUROPEEN

(11) **EP 2 097 714 B1**
(45) Date de publication et mention de la délivrance du brevet: **09.10.2013**
(21) Numéro de dépôt: 07871890.5
(22) Date de dépôt: 07.12.2007
(51) Int. Cl.: G01B 11/14

(54) **PROCEDE POUR DETERMINER LE JEU ET/OU LE DESAFFLEUREMENT D'UN OUVRANT NOTAMMENT D'UN VEHICULE SANS MISE EN REFERENCE DE L'OUVRANT**
VERFAHREN ZUR BESTIMMUNG DES SPIELRAUMS UND/ODER DER FEHLANPASSUNG EINER ÖFFNUNG FÜR EIN FAHRZEUG OHNE BEZUG AUF DIE ÖFFNUNG
METHOD FOR DETERMINING THE CLEARANCE AND/OR MISMATCH OF AN OPENING FOR A VEHICLE WITHOUT REFERENCING THE OPENING

(30) Priorité: 07.12.2006 FR 0655367
(43) Date de publication de la demande: 09.09.2009
(73) Titulaire: Edixia Automation SAS, 35772 Vern-sur-Seiche Cedex (FR)
(72) Inventeur: OLLIVIER, Michel, 35690 Acigne (FR); LEGEARD, Arnaud, 35170 Bruz (FR)
(74) Mandataire: Le Saux, Gaël
(86) Numéro de dépôt international: PCT/FR2007/052456
(87) Numéro de publication internationale: WO 2008/078029

(56) Documents cités:
- DE-A1- 19 910 699
- JP-A- 2003 254 743
- US-A- 5 416 590

## Description

La présente invention concerne le domaine technique du contrôle du positionnement d'un ouvrant au sens général par rapport à son environnement ou encadrement.

La présente invention concerne plus particulièrement le domaine de la mesure du jeu apparaissant entre le bord de l'ouvrant et l'encadrement ainsi que du décalage des plans d'extension entre l'ouvrant et l'encadrement appelé également désaffleurement.

La présente invention trouve une application particulièrement avantageuse mais non exclusive pour le contrôle des ouvrants d'un véhicule automobile tels que les portes latérales ou de coffre.

Dans le domaine du contrôle qualité de la carrosserie d'un véhicule, il apparaît le besoin de contrôler, par exemple avant l'opération de peinture, si les ouvrants se trouvent correctement positionnés par rapport à leur encadrement. Ce contrôle vise à déterminer si le jeu existant sur toute la périphérie de l'ouvrant avec l'encadrement présente une valeur incluse dans une plage de tolérance. De même, un tel contrôle doit déterminer si l'ouvrant affleure ou non l'encadrement. Le décalage de niveau ou désaffleurement de l'ouvrant doit également être contrôlé en divers points périphériques de l'ouvrant.

La difficulté de cette opération de contrôle du jeu et/ou du désaffleurement d'un ouvrant réside dans le fait que le contrôle est réalisé alors que le système de fermeture de l'ouvrant n'est pas encore monté. Or, la mesure du jeu et/ou du désaffleurement présente un sens uniquement pour un ouvrant occupant sa position de référence de fermeture déterminée par l'engagement de la gâche du système de fermeture dans son logement de réception.

Pour assurer le contrôle des ouvrants des véhicules sur une ligne de fabrication, il est connu, comme par exemple par le document JP 2003 25 47 43, de placer à l'entrée d'un poste d'inspection, des aimants au niveau de la gâche de fermeture de manière à positionner l'ouvrant dans sa position de référence de fermeture. Dans cette position de l'ouvrant, les mesures de jeu et/ou de désaffleurement sont réalisées à l'aide d'un système de capteurs de mesure effectuant les mesures en différents points de contrôle répartis à la périphérie de l'ouvrant de manière à déterminer si l'ouvrant occupe une position correcte ou non par rapport à l'encadrement. A la sortie du poste de contrôle, les aimants sont retirés des véhicules.

Afin d'automatiser le positionnement des ouvrants dans leur position de fermeture de référence, il est connu d'équiper la station de contrôle par un système de mécanique de mise en référence des ouvrants. Le système mécanique comporte un bras automatisé qui supporte une poutre pourvue de ventouses destinée à venir en contact avec l'ouvrant et l'encadrement de manière que l'ouvrant vienne occuper sa position de référence de fermeture. Le positionnement forcé de l'ouvrant par un tel système mécanique donne de bons résultats en terme de fiabilité. Toutefois, ce système mécanique présente l'inconvénient de nécessiter une forme de réalisation particulière pour chaque profil de véhicule. De plus, les coûts de conception et de maintenance d'un tel dispositif mécanique sont très importants.

La présente invention vise donc à remédier aux inconvénients de l'état de la technique en proposant une nouvelle technique pour déterminer de manière automatique le jeu et/ou le désaffleurement pour des ouvrants, cette technique étant indépendante de la forme de l'ouvrant.

Un autre objet de l'invention est de proposer une nouvelle technique adaptée pour déterminer sans contact avec l'ouvrant, le jeu et/ou désaffleurement d'un ouvrant.

Pour atteindre un tel objectif, l'invention concerne un procédé pour déterminer le désaffleurement et/ou le jeu d'un ouvrant par rapport à son encadrement, à l'aide d'un système de capteurs de mesure adapté pour effectuer des mesures de jeux et/ou de désaffleurements en différents points de contrôle de l'ouvrant, le procédé comportant :
- une phase de détermination d'une loi de variation des valeurs du jeu et/ou du désaffleurement pour les différents points de contrôle, en fonction de diverses positions d'ouverture de l'ouvrant prises par rapport à une position de référence dans laquelle l'ouvrant occupe sa position fermée de référence, correspondant à un point de contrôle de référence de l'ouvrant,
- une phase de mesure pour laquelle l'ouvrant occupe une position quelconque par rapport à l'encadrement et au cours de laquelle est réalisée une mesure des valeurs du jeu et/ou du désaffleurement aux différents points de contrôle de l'ouvrant,
- et une phase de prise en compte des valeurs mesurées du jeu et/ou du désaffleurement et de la loi de variation de manière à déterminer les valeurs réelles du jeu et/ou du désaffleurement aux différents points de contrôle correspondant à l'ouvrant dans sa position fermée de référence.

Selon une variante préférée de réalisation, la phase de détermination d'une loi de variation consiste en une phase d'apprentissage sur un ouvrant au cours de laquelle sont mesurées les valeurs de jeux et/ou de désaffleurements aux différents points de contrôle en fonction de diverses positions d'ouverture de l'ouvrant.

Selon une autre variante de réalisation, la phase de détermination d'une loi de variation consiste en une phase de modélisation d'un ouvrant positionné dans diverses positions d'ouverture et pour lesquelles sont calculées les valeurs de jeux et/ou d'affleurement aux différents points de contrôle.

Selon la variante préférée de réalisation, le procédé consiste pour la phase d'apprentissage, à déterminer pour les points de contrôle et à l'aide d'une loi des moindres carrés, une loi de variation :
- pour le jeu tel que : J_{Pi} = K + f(D_{P0}) avec K une constante déterminée lors de la phase d'apprentissage et f(D_{P0}) une fonction mathématique dépendant de la valeur Dₚ₀ du désaffleurement au point de contrôle de référence,
- pour le désaffleurement tel que : D_{Pi} = K₁ + f₁(D_{P0}) avec K₁ une constante déterminée lors de la phase d'apprentissage et f₁(D_{P0}), une fonction mathématique dépendant de la valeur Dₚ₀ du désaffleurement au point de contrôle de référence.

Avantageusement, le procédé consiste à déterminer les lois de variation pour le jeu et le désaffleurement par des fonctions mathématiques f et f₁ linéaires.

De préférence, le procédé consiste pour la phase de prise en compte, à corriger les valeurs mesurées du jeu et/ou du désaffleurement à chaque point de contrôle, par la loi de variation de manière à déterminer pour chaque point de contrôle, les valeurs réelles du jeu et/ou du désaffleurement.

Selon un mode de réalisation, le procédé consiste pour les points de contrôle Pᵢ, à déterminer pour l'ouvrant considéré dans sa position fermée de référence :
- les valeurs réelles du jeu telles : J_{RPi} = J_{mPi} + J_{cPi}
   avec J_{mPi}, le jeu mesuré au point de contrôle Pᵢ lors de la phase de mesure, et J_{cPi} la valeur de correction du jeu calculée à l'aide de la loi de variation préalablement déterminée (K + f(D_{P0})) et pour la valeur du désaffleurement D_{P0} mesurée au point de contrôle de référence (P₀),
- les valeurs réelles du désaffleurement telles que : D_{RP}i = D_{mPi} + D_{cPi}
   avec D_{mPi}, le jeu mesuré au point de contrôle Pᵢ lors de la phase de mesure, et D_{cPi} la valeur de correction du désaffleurement calculée à l'aide de la loi de variation préalablement déterminée (K₁ + f₁(D_{P0})) et pour la valeur du désaffleurement D_{P0} mesurée au point de contrôle de référence (P₀).

Selon une variante de réalisation, le procédé consiste à réaliser une mesure sensiblement simultanée des valeurs du jeu et/ou du désaffleurement aux différents points de contrôle de l'ouvrant.

Le procédé selon l'invention consiste à déterminer le jeu et/ou le désaffleurement d'un ouvrant pivotant autour de charnières.

Selon un exemple d'application, le procédé consiste à déterminer à déterminer le jeu et/ou le désaffleurement d'un ouvrant pivotant autour de charnières.

Selon un autre exemple d'application, le procédé consiste pour déterminer le jeu et/ou le désaffleurement d'un ouvrant pivotant adjacent à un ouvrant non monté :
- à choisir au moins un premier, un deuxième et un troisième points de contrôle situés respectivement au niveau des charnières de l'ouvrant pivotant, sur l'ouvrant pivotant à l'opposé des charnières, et sur l'encadrement de l'ouvrant non monté situé à l'opposé de l'ouvrant pivotant,
- à définir l'équation de la droite passant par les premier et troisième points de contrôle,
- à calculer la distance du deuxième point de contrôle par rapport à la droite calculée,
- à soustraire à cette distance, une valeur d'apprentissage obtenue lors du positionnement de l'ouvrant pivotant dans sa position de référence de fermeture de manière à obtenir la valeur de correction du désaffleurement,
- et à déterminer les valeurs réelles du jeu et/ou du désaffleurement aux différents points de contrôle correspondant à l'ouvrant dans sa position fermée de référence, en corrigeant les valeurs mesurées du jeu et/ou du désaffleurement à chaque point de contrôle, par la valeur de correction du désaffleurement.

Selon une variante préférée de réalisation, le procédé consiste à réaliser les mesures par un système de capteurs de projection de faisceaux lumineux et d'analyse de ces faisceaux lumineux.

Un autre objet de l'invention est de proposer une installation pour déterminer le désaffleurement et/ou le jeu d'un ouvrant par rapport à son encadrement comportant un système de capteur de mesure reliés à une unité de commande et de traitement permettant la mise en oeuvre du procédé conforme à l'invention.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en élévation montrant un ouvrant d'un véhicule dont le jeu et le désaffleurement sont à contrôler.
La **Figure 2** est une vue en coupe de dessus sensiblement selon les lignes II-II de la **Fig. 1****.**
La **Figure 3** est un tableau donnant pour différentes valeurs pour l'ouverture de l'ouvrant, des valeurs mesurées du jeu et du désaffleurement d'un point de contrôle P₁.
La **Figure 4** est une vue schématique d'un ouvrant adjacent à un ouvrant non monté.

L'objet de l'invention concerne un nouveau procédé pour déterminer le jeu **J** et/ou le désaffleurement **D** d'un ouvrant **1** par rapport à son encadrement ou son environnement **2** au sens général.

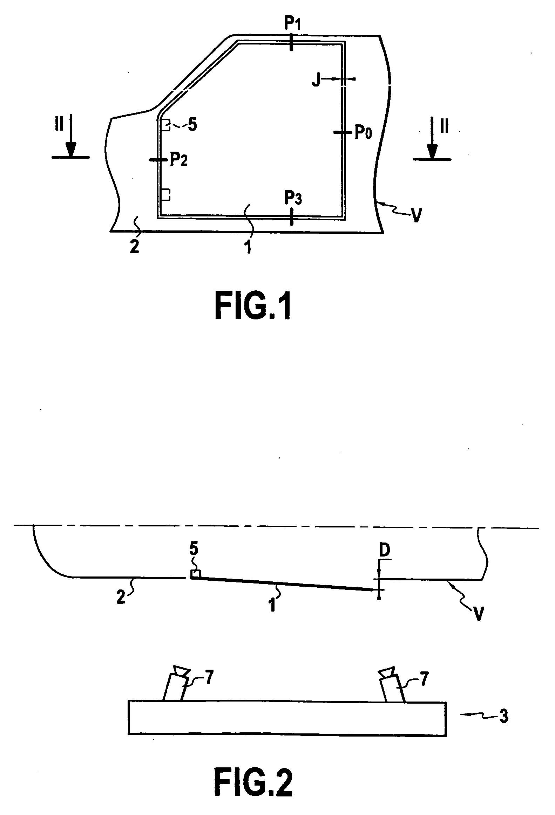

Dans la description qui suit en relation des **Fig. 1** et **2****,** le procédé est appliqué à un ouvrant pivotant **1** tel qu'une porte latérale d'un véhicule automobile **V** mais il est clair que l'objet de l'invention peut s'appliquer à n'importe que! type d'ouvrant. Dans l'exemple illustré, ie procédé selon l'invention est mis en oeuvre au niveau d'un poste de contrôle **3** installé sur la ligne de fabrication des véhicules automobiles. A ce stade de la fabrication, les ouvrants pivotants **1** sont montés sur la carrosserie **V** par l'intermédiaire de deux charnières **5** définissant l'axe de rotation ou de pivotement de l'ouvrant. Dans cet état, l'ouvrant **1** n'est pas équipé du système de fermeture tel que la gâche permettant de placer l'ouvrant dans sa position de fermeture de référence. Aussi, lors de leur passage au poste de contrôle **3,** les ouvrants **1** occupent une position de fermeture indéterminée qui est plus ou moins proche de la position de fermeture de référence imposée par le système de verrouillage de l'ouvrant.

Le poste de contrôle **3** est équipé d'un système de capteurs de mesure **7** adapté pour mesurer en différents points de contrôle Pᵢ (avec i = o à n) de l'ouvrant, les valeurs de jeu **J** et/ou de désaffleurement **D** de l'ouvrant. De préférence, les capteurs de mesure utilisés comportent un émetteur d'un faisceau lumineux tel qu'un faisceau laser et un récepteur de faisceaux tel qu'une caméra vidéo reliée à une unité de commande et de traitement permettant de déterminer les valeurs de jeu et de désaffleurement de l'ouvrant. Bien entendu, il est clair que le système de capteurs de mesure peut être d'un type différent par exemple du type ultrasonore. Les moyens de traitement des mesures pour obtenir les valeurs de jeu et de désaffleurement ne sont pas décrits plus précisément car ils sont bien connus de l'homme du métier et ne font pas partie de l'objet de l'invention.

Le procédé selon l'invention vise à déterminer sans contact en différents points de contrôle **Pᵢ** de l'ouvrant, les valeurs réelles du jeu et/ou du désaffleurement de l'ouvrant **1** correspondant à sa position de fermeture de référence alors que ce dernier n'est pas forcé à occuper cette position de fermeture de référence. En d'autres termes, les mesures des valeurs réelles du jeu et/ou du désaffleurement sont réalisées sans avoir recours à un système mécanique de positionnement de l'ouvrant dans sa position de référence de fermeture.

Pour mémoire, il est rappelé que le jeu **J** correspond à la distance séparant dans un plan le bord de l'ouvrant **1** de l'encadrement **2** tandis que le désaffleurement **D** correspond au décalage d'affleurement ou de niveau entre l'ouvrant **1** et l'encadrement **2.**

Le principe de l'invention vise à réaliser les mesures de jeu et de désaffleurement dans la position occupée par l'ouvrant lorsque le véhicule se présente au poste de contrôle **3.** Bien entendu, les mesures effectuées sont entachées d'une erreur puisque les mesures ne sont pas réalisées alors que l'ouvrant n'occupe pas sa position fermée de référence. Cette position fermée de référence est donnée lorsque la gâche du système de fermeture de l'ouvrant est engagée dans le logement de réception.

Le principe de l'invention vise donc à corriger les mesures réalisées à l'aide d'une mesure du désaffleurement de référence effectuées à un point de référence **P₀** de l'ouvrant pour lequel l'affleurement théorique est connu. Dans la description qui suit, le point de contrôle de référence **P₀** correspond au point de fermeture de l'ouvrant c'est-à-dire au point de montage de la gâche du système de fermeture. Bien entendu, il peut être envisagé de prendre comme point de contrôle de référence **P₀,** un autre point de contrôle pour lequel l'affleurement est connu pour l'ouvrant occupant sa position de fermeture de référence.

Cette correction repose sur le fait que l'axe de rotation de l'ouvrant est connu puisqu'il passe par l'axe des deux charnières **5.** Dans ces conditions, chaque point de l'ouvrant **1** se déplace dans un plan perpendiculaire à l'axe de rotation et d'une distance proportionnelle à la distance du point de contrôle à l'axe de rotation (valable pour les petits angles). Ainsi, à partir de la mesure du jeu et du désaffleurement, à un point de référence par exemple de fermeture et de la connaissance de la direction des capteurs et de leur distance à l'axe de rotation de l'ouvrant, les mesures de jeu et de désaffleurement réalisées sur les différents points de contrôle **Pᵢ** sont corrigées. En d'autres termes, le procédé selon l'invention consiste pour chaque point de contrôle, à déterminer pour l'ouvrant considéré dans sa position fermée de référence :
- les valeurs réelles du jeu telles que Jᵣₚᵢ = Jₘₚᵢ + J_{cpi} avec Jₘₚᵢ le jeu mesuré au point de contrôle Pᵢ lors de la phase de mesure et 3_{cpi} la valeur de correction du jeu,
- les valeurs réelles du désaffleurement telles que Dᵣₚᵢ = Dₘₚᵢ + D_{cpi} avec Dₘₚᵢ le jeu mesuré au point de contrôle Pᵢ lors de la phase de mesure et D_{cpi} la valeur de correction du désaffleurement.

Il apparaît donc nécessaire préalablement à la phase de mesure, de déterminer la nature de la correction à apporter aux mesures réalisées.

Le procédé selon l'invention comporte ainsi une phase initiale de détermination d'une loi de variation des valeurs du jeu et/ou du désaffleurement pour les différents points de contrôle **Pᵢ** en fonction de diverses positions d'ouverture de l'ouvrant prises par rapport à la position de référence dans laquelle l'ouvrant occupe sa position de fermeture de référence. Il est à noter que l'un des points de contrôle **Pᵢ** correspond au point de contrôle de référence **P₀** de l'ouvrant, c'est-à-dire dans l'exemple considéré à la position où sera montée la gâche de fermeture.

Selon une première variante de réalisation, la phase de détermination d'une loi de variation consiste en une phase de modélisation d'un ouvrant **1** positionné dans diverses positions d'ouverture et pour lesquelles sont calculées les valeurs de jeu et/ou de désaffleurement aux différents points de contrôle. Cette variante utilise un système de conception assisté par ordinateur afin de calculer la correction à apporter aux mesures réalisées. Cette variante nécessite de positionner les capteurs exactement aux points reportés sur la modélisation.

Selon une deuxième variante de réalisation, la phase de détermination d'une loi de variation consiste en une phase d'apprentissage sur un ouvrant au cours de laquelle sont mesurées les valeurs de jeu et/ou de désaffleurement aux différents points de contrôle **Pᵢ** en fonction de diverses positions d'ouverture de l'ouvrant. Cette phase d'apprentissage consiste à déterminer pour les points de contrôle **Pᵢ** et à l'aide d'une loi des moindres carrés, une loi de variation :
- pour le jeu tel que : J_{Pi} = K + f(D_{P0}) avec K une constante déterminée lors de la phase d'apprentissage et f(D_{P0}) une fonction mathématique dépendant de la valeur D_{P0} du désaffleurement au point de contrôle de référence **P₀** correspondant au point de fermeture,
- pour le désaffleurement tel que : D_{Pi} = K₁ + f₁(D_{P0}) avec K₁ une constante déterminée lors de la phase d'apprentissage et f₁(D_{P0}), une fonction mathématique dépendant de la valeur D_{P0} du désaffleurement au point de contrôle de référence **P₀** correspondant au point de fermeture.

Cette phase d'apprentissage vise donc à déterminer les constantes K, K1 ainsi que les fonctions mathématiques f et f₁.

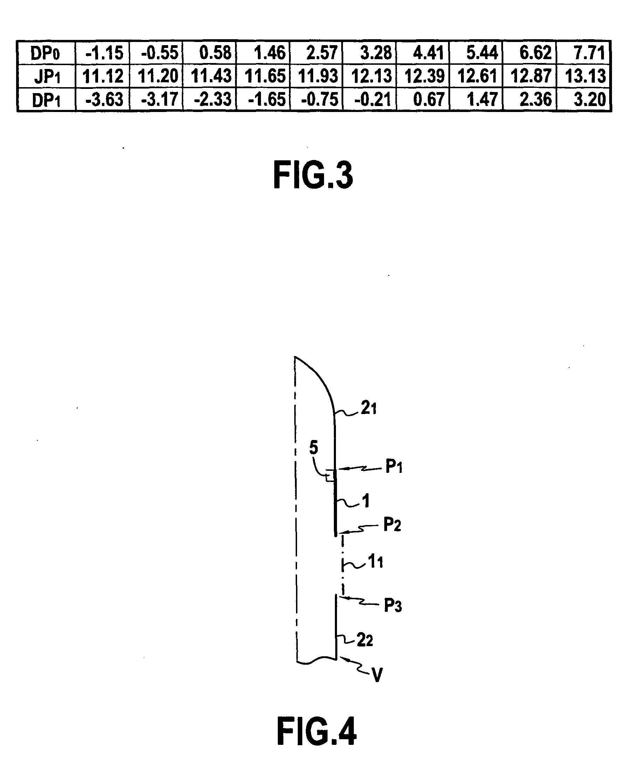

La phase d'apprentissage est réalisée sur un des véhicules destinés à être contrôlés. Sur un tel véhicule, les valeurs de jeu et/ou de désaffleurement sont mesurées en différents points de contrôle **Pᵢ** en fonction de diverses positions d'ouverture de l'ouvrant. Tel que cela ressort de la **Fig. 3****,** pour différentes positions d'ouverture de l'ouvrant correspondant au désaffleurement D_{P0} au point de référence **P₀,** les valeurs du jeu et du désaffleurement sont mesurées en divers points de contrôle **Pᵢ** du jeu J_{Pi} et de désaffleurement D_{Pi}. Dans l'exemple illustré à la **Fig. 3****,** seules les valeurs mesurées au point de contrôle **P₁** du jeu J_{P1} et de désaffleurement D_{P1} sont reportées. Bien entendu, il est clair que les valeurs du jeu et du désaffleurement peuvent être mesurées en plusieurs points de contrôle **Pᵢ.**

Il est à noter que lors de cette phase d'apprentissage, on a fait varier le désaffleurement de référence D_{P0} d'une amplitude suffisante pour obtenir une loi de variation correcte. Dans l'exemple illustré, l'amplitude totale de désaffleurement de référence **Dₚₒ** est de l'ordre de 9 mm, ce qui correspond à une valeur supérieure d'amplitude rencontrée lors des opérations de mesure.

A partir de ces mesures, il est défini la loi de variation **Jₚᵢ** pour le jeu et la loi de variation **Dₚᵢ** pour le désaffleurement. Le procédé vise ainsi à calculer la dépendance des différents points de mesure **P₁, P₂,...** par rapport à l'affleurement au point de contrôle de référence **P₀.** Dans l'exemple illustré, les lois de variation de l'affleurement **D_{P1}** et du jeu **J_{P1}** au point de contrôle **P₁** à l'aide d'une loi des moindres carrés sont les suivantes :
- Dₚ₁ = 0,7679 × (Dₚ₀) - 2,427
- Jₚ₁ = 0,2332 × (Dₚ₀) + 11,335

Les valeurs 11,335 et - 2,427 sont respectivement le jeu et l'affleurement au point de contrôle P₁ pour l'ouvrant du véhicule d'apprentissage.

Dans l'exemple considéré, il est à noter que les fonctions mathématiques **f** et **f₁** sont linéaires. Bien entendu, les fonctions mathématiques peuvent être différentes d'une loi de variation iinéaire avec constantes.

Après la réalisation de cette phase de détermination d'une loi de variation, il peut être envisagé de procéder au contrôle des ouvrants des véhicules.

Ainsi, lors du passage d'un véhicule à la station de contrôle, une phase de mesure est réalisée au cours de laquelle l'ouvrant **1** occupe, par rapport à l'encadrement, une position quelconque ou non définie de manière précise. Au cours de cette phase, est réalisée une mesure des valeurs du jeu et/ou du désaffleurement aux différents points de contrôle **Pᵢ** de l'ouvrant. Il est à noter que dans cette phase, les mesures sont réalisées nécessairement au point de contrôle de référence **P₀.**

De préférence, les mesures du jeu et/ou du désaffleurement aux différents points de contrôle **Pᵢ** de l'ouvrant sont réalisées de manière sensiblement simultanément.

Après l'accomplissement de cette phase de mesure, la phase suivante consiste à prendre en compte d'une part les valeurs mesurées du jeu et/ou du désaffleurement et d'autre part la loi de variation déterminée dans la phase initiale de manière à déterminer les valeurs réelles du jeu et/ou du désaffleurement aux différents points de contrôle **Pᵢ** correspondant à l'ouvrant dans sa position fermée de référence. En d'autres termes, cette phase de prise en compte vise à corriger les valeurs mesurées du jeu et/ou du désaffleurement à chaque point de contrôle par la loi de variation de manière à déterminer pour chaque point de contrôle, les valeurs réelles du jeu et/ou du désaffleurement. Le procédé consiste ainsi pour les points de contrôle **Pᵢ** à déterminer pour l'ouvrant considéré dans sa position fermée de référence :
- les valeurs réelles du jeu telles que Jᵣₚᵢ = Iₘₚᵢ + j_{cpi} avec _{Jmpi}, le jeu mesuré au point de contrôle Pᵢ lors de la phase de mesure et J_{cpi} la valeur de correction du jeu calculée à l'aide de la loi de variation préalablement déterminée (K + f(Dₚ₀)) et pour la valeur du désaffleurement Dₚ₀ mesurée au point de contrôle de référence P₀,
- les valeurs réelles du désaffleurement telles que Dᵣₚᵢ = Dₘₚᵢ + D_{cpi} avec Dₘₚᵢ, le jeu mesuré au point de contrôle Pᵢ lors de la phase de mesure et D_{cpi} la valeur de correction du désaffleurement calculée à l'aide de la loi de variation préalablement déterminée (K₁ + f₁Dₚ₀) et pour la valeur du désaffleurement Dₚ₀ mesurée au point de contrôle de référence P₀.

Le procédé selon l'invention permet ainsi de procéder à des mesures sur un ouvrant n'occupant pas la position de fermeture de référence mais en la corrigeant par rapport à la valeur de la position de référence de désaffleurement.

Dans la description qui précède, le procédé a été décrit pour un ouvrant pivotant autour de charnières s'étendant par rapport à son encadrement.

Il est à noter que l'objet de l'invention permet de déterminer le jeu et/ou le désaffleurement d'un ouvrant pivotant **1** adjacent à un ouvrant non monté **1₁** tel qu'un ouvrant coulissant tel qu'illustré à la **Fig. 4****.** Selon cet exemple, une partie de l'encadrement **2** de l'ouvrant **1** est constitué par un panneau fixe adjacent **2₁** et un panneau **2₂** distant du bord de l'ouvrant **1,** de manière à laisser subsister une ouverture destinée à recevoir une porte latérale coulissante **1₁.** Selon cette variante de réalisation, le procédé consiste à choisir au moins un premier **P₁**, un deuxième **P₂** et un troisième **P₃** points de contrôle situés respectivement au niveau des charnières **5** de l'ouvrant pivotant **1,** sur l'ouvrant pivotant **1** en un point opposé des charnières et sur l'encadrement **2₂** de l'ouvrant non monté **1₁** situé à l'opposé de l'ouvrant pivotant **1.**

Le procédé consiste ensuite à définir l'équation de la droite passant par les premier **P₁** et troisième points **P₃** de contrôle et à calculer la distance du deuxième point de contrôle **P₂** par rapport à la droite calculée. De cette distance est soustraite une valeur d'apprentissage obtenue lors du positionnement de l'ouvrant pivotant **1** dans sa position de contrôle de référence **P₀** de manière à obtenir la valeur de correction du désaffleurement.

Le procédé consiste à déterminer les valeurs réelles du jeu et/ou du désaffleurement aux différents points de contrôle correspondant à l'ouvrant dans sa position fermée de référence en corrigeant les valeurs mesurées du jeu et/ou du désaffleurement à chaque point de contrôle par la valeur de correction du désaffleurement. Le procédé n'est pas décrit plus précisément pour cette variante dans la mesure où le procédé reprend les différences décrites précisément en relation des **Fig. 1** à **3****.**

L'invention n'est pas limitée aux exemples décrits et représentés car diverses modifications peuvent y être apportées sans sortir du cadre tel que défini dans les revendications 1 à 13.

## Revendications

1. Procédé pour déterminer le désaffleurement et/ou le jeu d'un ouvrant **(1)** par rapport à son encadrement, à l'aide d'un système de capteurs de mesure **(7)** adapté pour effectuer des mesures de jeux et/ou de désaffleurements en différents points de contrôle **(Pᵢ)** de l'ouvrant, **caractérisé en ce qu'**il comporte :
- une phase de détermination d'une loi de variation des valeurs du jeu et/ou du désaffleurement pour ies différents points de contrôle **(Pᵢ),** en fonction de diverses positions d'ouverture de l'ouvrant prises par rapport à une position de référence dans laquelle l'ouvrant occupe sa position fermée de référence, correspondant à un point de contrôle de référence **(P₀)** de l'ouvrant,
- une phase de mesure pour laquelle l'ouvrant **(1)** occupe une position quelconque par rapport à l'encadrement et au cours de laquelle est réalisée une mesure des valeurs du jeu et/ou du désaffleurement aux différents points de contrôle de l'ouvrant,
- et une phase de prise en compte des valeurs mesurées du jeu et/ou du désaffleurement et de la loi de variation de manière à déterminer les valeurs réelles du jeu et/ou du désaffleurement aux différents points de contrôle correspondant à l'ouvrant dans sa position fermée de référence.

2. Procédé selon la revendication 1, **caractérisé en ce que** la phase de détermination d'une loi de variation consiste en une phase d'apprentissage sur un ouvrant au cours de laquelle sont mesurées les valeurs de jeux et/ou de désaffleurements aux différents points de contrôle en fonction de diverses positions d'ouverture de l'ouvrant.

3. Procédé selon la revendication 1, **caractérisé en ce que** la phase de détermination d'une loi de variation consiste en une phase de modélisation d'un ouvrant positionné dans diverses positions d'ouverture et pour lesquelles sont calculées les valeurs de jeux et/ou d'affleurement aux différents points de contrôle.

4. Procédé selon la revendication 2, **caractérisé en ce qu'**il consiste pour la phase d'apprentissage, à déterminer pour les points de contrôle **(Pᵢ)** et à l'aide d'une loi des moindres carrés, une loi de variation :
- pour le jeu tel que : J_{Pi} = K + f(D_{P0}) avec K une constante déterminée lors de la phase d'apprentissage et f(D_{P0}) une fonction mathématique dépendant de la valeur Dₚ₀ du désaffleurement au point de contrôle de référence **(P₀),**
- pour le désaffleurement tel que : D_{Pi} = K₁ + f₁(D_{P0}) avec K₁ une constante déterminée lors de la phase d'apprentissage et f₁(D_{P0}), une fonction mathématique dépendant de la valeur Dₚ₀ du désaffleurement au point de contrôle de référence **(P₀).**

5. Procédé selon la revendication 4, **caractérisé en ce qu'**il consiste à déterminer les lois de variation pour le jeu et le désaffleurement par des fonctions mathématiques f et f₁ linéaires.

6. Procédé selon les revendications 1 et 5, **caractérisé en ce qu'**il consiste pour la phase de prise en compte, à corriger les valeurs mesurées du jeu et/ou du désaffleurement à chaque point de contrôle, par la loi de variation de manière à déterminer pour chaque point de contrôle, les valeurs réelles du jeu et/ou du désaffleurement.

7. Procédé selon la revendication 6, **caractérisé en ce qu'**il consiste pour les points de contrôle Pᵢ, à déterminer pour l'ouvrant considéré dans sa position fermée de référence :
- les valeurs réelles du jeu telles : J_{RPi} = J_{mPi} + J_{cPi}
avec J_{mPi}, le jeu mesuré au point de contrôle Pᵢ lors de la phase de mesure, et J_{cPi} la valeur de correction du jeu calculée à l'aide de la loi de variation préalablement déterminée (K + f(D_{P0})) et pour la valeur du désaffleurement D_{P0} mesurée au point de contrôle de référence (P₀),
- les valeurs réelles du désaffleurement telles que : D_{RPi} = D_{mPi} + D_{cPi}
avec D_{mPi}, le jeu mesuré au point de contrôle Pᵢ lors de la phase de mesure, et D_{cPi} la valeur de correction du désaffleurement calculée à l'aide de la loi de variation préalablement déterminée (K₁ + f₁(D_{P0})) et pour la valeur du désaffleurement D_{P0} mesurée au point de contrôle de référence (P₀).

8. Procédé selon la revendication 1, **caractérisé en ce qu'**il consiste à réaliser une mesure sensiblement simultanée des valeurs du jeu et/ou du désaffleurement aux différents points de contrôle de l'ouvrant.

9. Procédé selon la revendication 2, **caractérisé en ce qu'**il consiste à réaliser la phase d'apprentissage sur au moins un ouvrant d'un véhicule pris sur une chaîne de fabrication de véhicules.

10. Procédé selon l'une des revendications 1 à 9, **caractérisé en ce qu'**il consiste à déterminer le jeu et/ou le désaffleurement d'un ouvrant pivotant autour de charnières.

11. Procédé selon l'une des revendication 1 à 9, **caractérisé en ce qu'**il consiste pour déterminer le jeu et/ou le désaffleurement d'un ouvrant pivotant (1) adjacent à un ouvrant non monté **(1₁) :**
- à choisir au moins un premier **(P₁),** un deuxième **(P₂)** et un troisième **(P₃)** points de contrôle situés respectivement au niveau des charnières **(5)** de l'ouvrant pivotant, sur l'ouvrant pivotant à l'opposé des charnières, et sur l'encadrement **(2₂)** de l'ouvrant non monté situé à l'opposé de l'ouvrant pivotant,
- à définir l'équation de la droite passant par les premier et troisième points de contrôle,
- à calculer la distance du deuxième point de contrôle par rapport à la droite calculée,
- à soustraire à cette distance, une valeur d'apprentissage obtenue lors du positionnement de l'ouvrant pivotant dans sa position de référence de fermeture de manière à obtenir la valeur de correction du désaffleurement,
- et à déterminer les valeurs réelles du jeu et/ou du désaffleurement aux différents points de contrôle correspondant à l'ouvrant dans sa position fermée de référence, en corrigeant les valeurs mesurées du jeu et/ou du désaffleurement à chaque point de contrôle, par la valeur de correction du désaffleurement.

12. Procédé selon la revendication 1, **caractérisé en ce qu'**il consiste à réaliser les mesures par un système de capteurs de projection de faisceaux lumineux et d'analyse de ces faisceaux lumineux.

13. Installation pour déterminer le désaffleurement et/ou le jeu d'un ouvrant par rapport à son encadrement **caractérisée en ce qu'**elle comporte un système de capteurs de mesure **(7)** reliés à une unité de commande et de traitement permettant la mise en oeuvre du procédé conforme à la revendication 1.

## Patentansprüche

1. Verfahren zum Bestimmen der Bündigkeit und/oder des Spaltes eines Öffnungselements (1) in Bezug auf seine Umrahmung mit Hilfe eines Systems von Messaufnehmern (7), das dafür eingerichtet ist, Messungen von Spalt und/oder von Bündigkeit an verschiedenen Kontrollpunkten (Pᵢ) des Öffnungselements durchzuführen, **dadurch gekennzeichnet, dass** es aufweist:
- eine Phase der Bestimmung eines Änderungsgesetzes der Werte des Spaltes und/oder der Bündigkeit für die verschiedenen Kontrollpunkte (Pᵢ) als Funktion von verschiedenen Öffnungspositionen des Öffnungselements, die in Bezug auf eine Referenzposition genommen werden, in welcher das Öffnungselement seine geschlossene Referenzposition einnimmt, welche einem Referenzkontrollpunkt (P₀) des Öffnungselements entspricht,
- eine Messphase, für welche das Öffnungselement (1) eine beliebige Position in Bezug auf die Umrahmung einnimmt und in deren Verlauf eine Messung der Werte des Spaltes und/oder der Bündigkeit an den verschiedenen Kontrollpunkten des Öffnungselements durchgeführt wird,
- und eine Phase der Berücksichtigung der gemessenen Werte des Spaltes und/oder der Bündigkeit und des Änderungsgesetzes, um die Istwerte des Spaltes und/oder der Bündigkeit an den verschiedenen Kontrollpunkten zu bestimmen, die dem Öffnungselement in seiner geschlossenen Referenzposition entsprechen.

2. Verfahren nach Anspruch 1, **dadurch gekennzeichnet, dass** die Phase der Bestimmung eines Änderungsgesetzes aus einer Lernphase an einem Öffnungselement besteht, in deren Verlauf die Werte von Spalt und/oder von Bündigkeit an den verschiedenen Kontrollpunkten in Abhängigkeit von verschiedenen Öffnungspositionen des Öffnungselements gemessen werden.

3. Verfahren nach Anspruch 1, **dadurch gekennzeichnet, dass** die Phase der Bestimmung eines Änderungsgesetzes aus einer Phase der Modellierung eines Öffnungselements besteht, das in verschiedenen Öffnungspositionen positioniert ist, und für welche die Werte von Spalt und/oder Bündigkeit an den verschiedenen Kontrollpunkten berechnet werden.

4. Verfahren nach Anspruch 2, **dadurch gekennzeichnet, dass** es für die Lernphase darin besteht, für die Kontrollpunkte (Pᵢ) und mit Hilfe eines Gesetzes der kleinsten Quadrate ein Änderungsgesetz zu bestimmen:
- für den Spalt in der Form J_{Pi} = K + f(D_{P0}), wobei K eine Konstante ist, die während der Lernphase bestimmt wird, und f(D_{P0}) eine mathematische Funktion ist, die von dem Wert D_{P0} der Bündigkeit in dem Referenzkontrollpunkt (P₀) abhängt,
- für die Bündigkeit in der Form D_{Pi} = K₁ + f₁(D_{P0}), wobei K₁ eine Konstante ist, die während der Lernphase bestimmt wird, und f₁(D_{P0}) eine mathematische Funktion ist, die von dem Wert D_{P0} der Bündigkeit in dem Referenzkontrollpunkt (P₀) abhängt.

5. Verfahren nach Anspruch 4, **dadurch gekennzeichnet, dass** es darin besteht, das Änderungsgesetz für den Spalt und die Bündigkeit mittels linearer mathematischer Funktionen f und f₁ zu bestimmen.

6. Verfahren nach den Ansprüchen 1 bis 5, **dadurch gekennzeichnet, dass** es für die Phase der Berücksichtigung darin besteht, die gemessenen Werte des Spaltes und/oder der Bündigkeit an jedem Kontrollpunkt mittels des Änderungsgesetzes zu korrigieren, um für jeden Kontrollpunkt die Istwerte des Spaltes und/oder der Bündigkeit zu bestimmen.

7. Verfahren nach Anspruch 6, **dadurch gekennzeichnet, dass** es darin besteht, für die Kontrollpunkte Pᵢ für das betreffende Öffnungselement in seiner geschlossenen Referenzposition zu bestimmen:
- die Istwerte des Spaltes in der Form J_{RPi} = J_{mPi} + J_{cPi},
wobei J_{mPi} der gemessene Spalt am Kontrollpunkt Pᵢ während der Messphase ist und J_{cPi} der Korrekturwert des Spaltes ist, der mit Hilfe des zuvor bestimmten Änderungsgesetzes (K + f(D_{P0})) und für den im Referenzkontrollpunkt (P₀) gemessenen Wert der Bündigkeit D_{P0} berechnet wurde,
- die Istwerte der Bündigkeit in der Form D_{RPi} = D_{mPi} + D_{cPi},
wobei D_{mPi} der gemessene Spalt am Kontrollpunkt Pᵢ während der Messphase ist und D_{cPi} der Korrekturwert der Bündigkeit ist, der mit Hilfe des zuvor bestimmten Änderungsgesetzes (K₁ + f₁(D_{P0})) und für den im Referenzkontrollpunkt (P₀) gemessenen Wert der Bündigkeit D_{P0} berechnet wurde.

8. Verfahren nach Anspruch 1, **dadurch gekennzeichnet, dass** es darin besteht, eine im Wesentlichen gleichzeitige Messung der Werte des Spaltes und/oder der Bündigkeit an den verschiedenen Kontrollpunkten des Öffnungselements durchzuführen.

9. Verfahren nach Anspruch 2, **dadurch gekennzeichnet, dass** es darin besteht, die Lernphase an mindestens einem Öffnungselement eines Fahrzeugs durchzuführen, das aus einer Fahrzeugproduktionslinie entnommen wurde.

10. Verfahren nach einem der Ansprüche 1 bis 9, **dadurch gekennzeichnet, dass** es darin besteht, der Spalt und/oder die Bündigkeit eines Öffnungselements zu bestimmen, das um Scharniere schwenkt.

11. Verfahren nach einem der Ansprüche 1 bis 9, **dadurch gekennzeichnet, dass** es darin besteht, um der Spalt und/oder die Bündigkeit eines schwenkbaren Öffnungselements (1) zu bestimmen, das einem nicht montierten Öffnungselement (1₁) benachbart ist:
- mindestens einen ersten (P₁), einen zweiten (P₂) und einen dritten (P₃) Kontrollpunkt zu wählen, die sich auf Höhe von Scharnieren (5) des schwenkbaren Öffnungselements, an dem schwenkbaren Öffnungselement gegenüber den Scharnieren und an der Umrahmung (2₂) des gegenüber dem schwenkbaren Öffnungselement befindlichen nicht montierten Öffnungselements befinden,
- die Gleichung der Geraden zu definieren, welche durch den ersten und dritten Kontrollpunkt verläuft,
- den Abstand des zweiten Kontrollpunktes bezüglich der berechneten Geraden zu berechnen,
- von diesem Abstand einen Lernwert zu subtrahieren, der bei der Positionierung des schwenkbaren Öffnungselements in seiner geschlossenen Referenzposition erhalten wurde, um den Korrekturwert der Bündigkeit zu erhalten,
- und die Istwerte des Spaltes und/oder der Bündigkeit an den verschiedenen Kontrollpunkten, die dem Öffnungselement in seiner geschlossenen Referenzposition entsprechen, durch Korrigieren der gemessenen Werte des Spaltes und/oder der Bündigkeit an jedem Kontrollpunkt mittels des Korrekturwertes der Bündigkeit zu bestimmen.

12. Verfahren nach Anspruch 1, **dadurch gekennzeichnet, dass** es darin besteht, die Messungen mittels eines Systems von Aufnehmern zur Projektion von Lichtbündeln und der Analyse dieser Lichtbündel durchzuführen.

13. Anlage zum Bestimmen der Bündigkeit und/oder des Spaltes eines Öffnungselements in Bezug auf seine Umrahmung, **dadurch gekennzeichnet, dass** sie ein System von Messaufnehmern (7) aufweist, die mit einer Steuerungs- und Verarbeitungseinheit verbunden sind, welche die Durchführung des Verfahrens nach Anspruch 1 ermöglicht.

## Claims

1. Method for determining the flush and/or the gap of a leaf (1) relative to its frame, using a system of measurement sensors (7) adapted to perform gap and/or flush measurements at different inspection points (Pᵢ) of the leaf, **characterised in that** it comprises:
- a phase for determining a law of variation of the gap and/or flush values for the different inspection points (Pᵢ) as a function of various opening positions of the leaf taken relative to a reference position in which the leaf occupies its reference closed position, corresponding to a reference inspection point (P₀) of the leaf,
- a measurement phase for which the leaf (1) occupies any position relative to the frame and during which the gap and/or flush values are measured at the different inspection points of the leaf,
- and a phase for taking into account the measured gap and/or flush values and the law of variation so as to determine the true gap and/or flush values at the different inspection points corresponding to the leaf in its reference closed position.

2. Method according to Claim 1, **characterised in that** the phase for determining a law of variation consists of a learning phase on a leaf, during which the gap and/or flush values are measured at the different inspection points as a function of various opening positions of the leaf.

3. Method according to Claim 1, **characterised in that** the phase for determining a law of variation consists of a phase for modelling a leaf positioned in various opening positions and for which the gap and/or flush values are calculated at the different inspection points.

4. Method according to Claim 2, **characterised in that**, for the learning phase, it consists in determining, for the inspection points (Pᵢ) and using a least-squares law, a law of variation:
- for the gap such that: J_{Pi} = K + f(D_{P0}) where K is a constant determined during the learning phase and f(D_{P0}) is a mathematical function dependent upon the flush value D_{P0} at the reference inspection point (P₀),
- for the flush such that: D_{Pi} = K₁ + f₁(D_{P0}) where K₁ is a constant determined during the learning phase and f₁(D_{P0}) is a mathematical function dependent upon the flush value D_{P0} at the reference inspection point (P₀).

5. Method according to Claim 4, **characterised in that** it consists in determining the laws of variation for the gap and the flush using linear mathematical functions f and f₁.

6. Method according to Claims 1 and 5, **characterised in that**, for the phase for taking into account, it consists in correcting the measured gap and/or flush values at each inspection point using the law of variation so as to determine the true gap and/or flush values for each inspection point.

7. Method according to Claim 6, **characterised in that**, for the inspection points Pᵢ, it consists in determining for the leaf under consideration in its reference closed position:
- the true gap values such: J_{RPi} = J_{mPi} + J_{cPi} where J_{mPi} is the gap measured at the inspection point Pᵢ during the gap phase, and J_{cPi} is the gap correction value calculated using the previously determined law of variation (K + f(D_{P0})) and for the flush value D_{P0} measured at the reference inspection point (P₀),
- the true flush values such that: D_{RPi} = D_{mPi} + D_{cPi} where D_{mPi} is the gap measured at the inspection point Pᵢ during the measurement phase, and D_{cPi} is the flush correction value calculated using the previously determined law of variation (K₁ + f₁(D_{P0})) and for the flush value D_{P0} measured at the reference inspection point (P₀).

8. Method according to Claim 1, **characterised in that** it consists in performing a substantially simultaneous measurement of the gap and/or flush values at the different inspection points of the leaf.

9. Method according to Claim 2, **characterised in that** it consists in conducting the learning phase on at least one leaf of a vehicle taken from a vehicle production line.

10. Method according to one of Claims 1 to 9, **characterised in that** it consists in determining the gap and/or the flush of a leaf pivoting about hinges.

11. Method according to one of Claims 1 to 9, **characterised in that**, to determine the gap and/or the flush of a pivoting leaf (1) adjacent to a non-mounted leaf (1₁), it consists:
- in choosing at least one first (P₁), one second (P₂) and one third (P₃) inspection points respectively located at the hinges (5) of the pivoting leaf, on the pivoting leaf opposite the hinges, and on the frame (2₂) of the non-mounted leaf lying opposite the pivoting leaf,
- in defining the equation of the straight line passing through the first and third inspection points,
- in calculating the distance of the second inspection point relative to the calculated straight line,
- in subtracting from this distance a learning value obtained during positioning of the pivoting leaf in its reference closed position so as to obtain the flush correction value,
- and in determining the true gap and/or flush values at the different inspection points corresponding to the leaf in its reference closed position by correcting the measured gap and/or flush values at each inspection point using the flush correction value.

12. Method according to Claim 1, **characterised in that** it consists in performing the measurements using a system of sensors for projection of light beams and for analysis of these light beams.

13. Installation for determining the flush and/or the gap of a leaf relative to its frame, **characterised in that** it comprises a system of measurement sensors (7) linked to a control and processing unit enabling the implementation of the method in accordance with Claim 1.
